# EUROPEAN PATENT APPLICATION

(11) **EP 3 834 995 A1**
(43) Date of publication of application: **16.06.2021**
(21) Application number: 18941145.7
(22) Date of filing: 27.11.2018
(51) Int. Cl.: B25G 1/00, B23D 51/10, B27B 21/04

(54) **SAW HANDLE AND SAW PROVIDED WITH SAW HANDLE**

(71) Applicant: U.M. Kogyo Inc., Ono-shi, Hyogo 675-1343 (JP)
(72) Inventor: MIYAWAKI Shozo, Ono-shi, Hyogo 675-1343 (JP)
(74) Representative: Isarpatent
(86) International application number: PCT/JP2018/043484
(87) International publication number: WO 2020/110189

(57) **Abstract**

Provided are a saw handle and a saw provided with the saw handle, wherein the saw handle can be produced easily and efficiently at a low production cost even in different lengths, is easy for a user to use, enables an extended service life, and allows the user to change the design or replace worn-out parts by himself/herself. The saw handle 10, used with a saw blade 20 mounted on its distal end, includes a handle body 11 and a mounted body 12 mounted on the handle body 11, wherein the handle body 11 has its wide range in the longitudinal direction divided into a plurality of unit compartments K, the mounted body 12 is composed of a plurality of unit mounted bodies 12 to be mounted on the plurality of unit compartments K, respectively, and the plurality of unit mounted bodies 12 are detachably attached correspondingly to the plurality of unit compartments K of the handle body 11.

## Description

### Technical Field

The present invention relates to a saw handle used with a saw blade mounted on its distal end or the like, and a saw provided with the saw handle.

### Background Art

Conventionally, various saws have been developed to allow only a saw blade to be replaced in the event of wear, soil, or breakage associated with the use. Further, for the purposes of reducing the weight and improving the fit and grip during use, a variety of saw handles are provided in which an elastic body such as rubber is mounted on a handle body constituting the framework of the saw handle.

Background art disclosing such conventional saw handles includes Patent Literatures (PTL) 1 and 2 below.

### Citation List

### Patent Literature

PTL 1: Japanese Patent Application Laid-Open No. 2004-34282
PTL 2: Japanese Translation of PCT International Publication No. 2012/098672

### Summary of Invention

### Technical Problem

PTL 1 above discloses a saw handle in which a gusset portion (plate portion) 5 on a proximal end side of a saw blade 7 is provided with a plurality of insertion holes 6. A handle member 2 having projections 1 and a handle member 4 having inserting bores 3 are provided as a pair, and the pair of handle members 2 and 4 are joined together while sandwiching the gusset portion 5 from both sides.

PTL 2 discloses a technique of constructing a grip of a saw or the like, wherein a single piece of grip jacket 10 is provided and mounted on a grip body 20 constituting a main part of a handle body 2 which is to serve as the grip.

PTL 1 and PTL 2 both disclose a saw handle having an elastic body such as rubber mounted on the handle body. However, in both of them, the rubber or other elastic body would be made to a length corresponding to the grip length that differs for each model number of the handle body.

Accordingly, in the conventional saw handles, for example in the case of producing saw handles of various lengths for different model numbers, it was necessary to prepare mounted bodies of different lengths and sizes each time for each model number. It was therefore difficult to achieve production efficiency and production cost savings.

Therefore, an object of the present invention is to solve the problems of the conventional techniques as described above by providing a saw handle and a saw provided with the saw handle, wherein the saw handle can be produced easily and efficiently at a low production cost even in different lengths, is easy for a user to use, enables an extended service life, and allows the user to change the design or replace worn-out parts by himself/herself.

### Solution to Problem

To accomplish the above object, a saw handle according to the present invention has a first feature that it is a saw handle used with a saw blade mounted on a distal end thereof, the saw handle including: a handle body; and a mounted body mounted on the handle body; wherein the handle body has a wide range in a longitudinal direction divided into a plurality of unit compartments, the mounted body is composed of a plurality of unit mounted bodies to be mounted on the plurality of unit compartments, respectively, and the plurality of unit mounted bodies are detachably attached correspondingly to the plurality of unit compartments of the handle body.

Further, the saw handle according to the present invention has, in addition to the first feature described above, a second feature that the unit compartments formed in the handle body are each demarcated by boundary ribs configured to protrude from a surface of the handle body, the adjacent boundary ribs define a mounting recess therebetween on which the mounted body is to be mounted, and the plurality of unit mounted bodies are detachably attached to the mounting recesses between the boundary ribs, correspondingly to the plurality of unit compartments of the handle body.

Further, the saw handle according to the present invention has, in addition to the first or second feature described above, a third feature that the handle body is made of a metal body having an approximately inverted U shape and has downward fitting protrusions at both lower ends of the approximately inverted U-shaped handle body, the mounted body is made of a rubber or other elastic body having an approximately inverted U shape and has downward fitting receiving portions at both lower ends of the approximately inverted U-shaped mounted body, and the mounted body is detachably attached to the handle body by fitting the downward fitting receiving portions of the mounted body to the downward fitting protrusions of the handle body.

Further, the saw handle according to the present invention has, in addition to any of the first through third features described above, a fourth feature that the handle body has transverse fitting protrusions in the center of both side surfaces of each unit compartment, the mounted body has transverse fitting receiving portions in the center of both side surfaces thereof, and the mounted body is detachably attached to the handle body by fitting the transverse fitting receiving portions of the mounted body to the transverse fitting protrusions of the handle body.

Further, the saw handle according to the present invention has, in addition to any of the first through fourth features described above, a fifth feature that the plurality of unit compartments in the handle body are composed of unit compartments of a single type or two or more types of different dimensions, the mounted body is composed of unit mounted bodies of a single type or two or more types corresponding respectively to the types of the unit compartments, and the unit mounted bodies are detachably attached correspondingly to the plurality of unit compartments of the handle body.

Further, the saw handle according to the present invention has, in addition to the fifth feature described above, a sixth feature that each type of the unit mounted bodies has, as subtypes thereof, at least different-color unit mounted bodies that vary only in color, different-thickness unit mounted bodies that vary only in thickness, and different-color-and-thickness unit mounted bodies that vary in color and thickness, and to each of the plurality of unit compartments of the handle body, the unit mounted body of any of the subtypes of the corresponding type is detachably attached.

Further, a saw according to the present invention has a seventh feature that the saw includes: the saw handle having any of the first through sixth features described above; and a saw blade mounted on a distal end of the saw handle.

### Advantageous Effects of Invention

According to the saw handle recited in claim 1, a plurality of unit compartments are formed over a wide range in the longitudinal direction of the handle body, and the unit mounted bodies are detachably attached to the unit compartments, respectively. Increasing the number of the unit compartments increases the length of the handle body according to the increased number, and decreasing the number of the unit compartments decreases the length of the handle body according to the decreased number. For the mounted body, unit mounted bodies corresponding to the unit compartments are prepared in advance. To the unit compartments increased or decreased in number depending on the length of the handle body, the required number of unit mounted bodies are detachably attached, to thereby complete the handle body. There is no need to prepare a new die suited to the length of the saw handle each time.

The unit mounted bodies are produced as parts separately from the handle body having a plurality of unit compartments. This makes it significantly easy to produce saw handles of various lengths that use the unit mounted bodies as common parts for the handle bodies with the increased or decreased number of unit compartments.

Therefore, according to the saw handle recited in claim 1, the saw handles of different lengths can be produced easily using the common mounted bodies, leading to cost savings in the production of the saw handles.

Further, the handle body has its length increased or decreased in units of the unit compartments. Accordingly, a punching die, pressing die or other die for use in producing handle bodies of different lengths can be formed as a combination die composed of one basic die and added dies. This reduces the cost for the dies and the like.

Of course, as for the unit mounted bodies as well, unit mounted bodies of only a small number of types for saw handles of various lengths can be prepared in advance to produce such various saw handles. Eventually, the unit mounted bodies of required types can be produced at a very low cost, with inexpensive equipment cost.

Further, according to the saw handle recited in claim 1, the worn-out unit mounted body can readily be replaced with a unit mounted body stocked by the user. This also produces a significant effect for the user to be able to continue using the saw for a long time.

Further, according to the saw handle recited in claim 1, eventually, the mounted body which is mounted on the handle body is reduced in total weight, leading to a considerable reduction in weight of the saw handle.

According to the saw handle recited in claim 2, in addition to the functions and effects obtained by the configuration recited in claim 1, the unit compartments are each demarcated by boundary ribs configured to protrude from a surface of the handle body. The place between the adjacent boundary ribs becomes a mounting recess on which the mounted body is mounted. A plurality of unit mounted bodies are detachably attached to the mounting recesses between the boundary ribs, correspondingly to the plurality of unit compartments.

The boundary ribs demarcating a unit compartment form a mounting recess therebetween, and a unit mounted body to be attached to each unit compartment is attached to the mounting recess between the boundary ribs. This ensures accurate and reliable attachment to the unit compartment. Each unit mounted body thus attached is securely positioned in the unit compartment corresponding to the mounting recess, without the inconvenience of overlapping with adjacent front and rear unit mounted bodies.

According to the saw handle recited in claim 2, provision of the boundary ribs allows the mounted bodies to be readily and reliably attached to the corresponding unit compartments. Even if a force is applied in the attached state, the displacement to the front or rear is prevented reliably. This results in a good feel of use, and also improves the durability of the mounted body effectively, as the mounted body suffers no rubbing due to the displacement.

According to the saw handle recited in claim 3, in addition to the functions and effects obtained by the configuration recited in claim 1 or 2, the handle body is a metal body of an approximately inverted U shape, with downward fitting protrusions at both lower ends thereof. The mounted body is a rubber or other elastic body of an approximately inverted U shape, and downward fitting receiving portions corresponding to the fitting protrusions of the handle body are provided at both lower ends thereof. Fitting the downward fitting receiving portions of the mounted body to the downward fitting protrusions of the handle body makes it possible to detachably attach the mounted body to the handle body in an easy and reliable manner.

According to the saw handle recited in claim 3, the handle body is the metal body of an approximately inverted U shape, and the mounted body is attached thereto. This allows various saw handles of different lengths for foldable saws to be produced using common mounted bodies. In the case of a foldable saw, the saw handle needs to be increased or decreased in length depending on the length of the saw blade. The use of the handle body, having the increased or decreased number of unit compartments, together with the unit mounted bodies makes it possible to prepare different saw handles as desired.

According to the saw handle recited in claim 4, in addition to the functions and effects obtained by the configuration recited in any of claims 1 to 3, transverse fitting protrusions are formed in the handle body in the center of both side surfaces of each unit compartment, and transverse fitting receiving portions are formed in the mounted body in the center of both side surfaces thereof. The mounted body is detachably attached to the handle body by fitting the transverse fitting receiving portions of the mounted body to the transverse fitting protrusions of the handle body.

Thus, fitting the transverse fitting receiving portions in each mounted body of the mounted body to the transverse fitting protrusions formed in the center of each unit compartment of the handle body makes it possible to secure the proper position of the mounted body, sufficiently preventing positional shift thereof.

According to the saw handle recited in claim 5, in addition to the functions and effects obtained by the configuration recited in any of claims 1 to 4, the plurality of unit compartments in the handle body may be configured with the unit compartments of a single type, those of two types with different dimensions, or even those of three or more types with different dimensions. In the case where the plurality of unit compartments in the handle body are all configured with the unit compartments of a single type, the unit mounted bodies of a single type are attached to all the unit compartments. In the case where the plurality of unit compartments in the handle body are configured with the unit compartments of two types, unit mounted bodies of two types corresponding to the two types of unit compartments are prepared and attached thereto. For the handle body having unit compartments of three or more types, unit mounted bodies of the corresponding three or more types are prepared and attached to all the unit compartments.

Thus, according to the saw handle recited in claim 5, even in the case of saw handles with dimensions or shapes varying in the longitudinal direction, handle bodies with unit compartments of one or more types corresponding thereto and unit mounted bodies of one or more types corresponding to the types of the unit compartments of the handle bodies can be prepared, so that various types of saw handles with different dimensions or shapes can readily be produced at low production cost.

According to the saw handle recited in claim 6, in addition to the functions and effects obtained by the configuration recited in claim 5, each type of the unit mounted bodies has, as its subtypes, at least different-color unit mounted bodies that vary only in color, different-thickness unit mounted bodies that vary only in thickness, and different-color-and-thickness unit mounted bodies that vary in color and thickness. This allows a manufacturer or a user to complete a saw handle of color-coded design, as desired, by freely using the different-color unit mounted bodies as the subtypes of the same type varying only in color. It is also possible to produce saw handles of different grip thicknesses according to the user preference, by using the thickness-different unit mounted bodies as the subtypes of the same type varying only in thickness. It is of course possible to produce saw handles using different-color-and-thickness unit mounted bodies as the subtypes that vary in color and thickness. In addition, unit mounted bodies of wet or dry subtypes may also be used to produce saw handles as requested, easily and simply at low cost.

According to the saw recited in claim 7, the saw has the saw handle recited in any of claims 1 to 6, and a saw blade mounted on a distal end of the saw handle. It is thus possible to provide a saw that is light in weight, is easy to use, and can reduce the production cost.

### Brief Description of Drawings

FIG. 1 shows a foldable saw using a saw handle according to an embodiment of the present invention, with a saw blade in a use position.
FIG. 2 is a front view of the foldable saw using the saw handle according to the embodiment of the present invention, with the saw blade in the retracted position.
FIG. 3 shows the saw handle according to the embodiment of the present invention, wherein (a) is a plan view and (b) is a bottom view.
FIG. 4 shows a handle body of the saw handle according to the embodiment of the present invention, wherein (a) is a front view, (b) is a plan view, and (c) is a bottom view.
FIG. 5 is an enlarged view of a portion of the saw handle according to the embodiment of the present invention, wherein (a) is a plan view illustrating a state where one of unit compartments of the handle body is uncovered with a mounted body, and (b) is a bottom view thereof.
FIG. 6 is an enlarged view of a portion of the saw handle according to the embodiment of the present invention, wherein (a) is a front view illustrating a state where a mounted body is detached from a part of the handle body, (b) is an overall perspective view of the mounted body as seen from the right side, and (c) is a perspective view illustrating a main part on the inner side of the mounted body.
FIG. 7 shows lateral cross sections in the center of a unit compartment of the saw handle according to the embodiment of the present invention, wherein (a) is a cross-sectional view illustrating a state where the mounted body is attached to the handle body, (b) is a cross-sectional view illustrating the handle body alone, and (c) is a cross-sectional view illustrating the mounted body alone.
FIG. 8 is an exploded perspective view illustrating the main part of a foldable saw according to an embodiment of the present invention.

### Description of Embodiment

A saw handle and a foldable saw provided with the saw handle according to an embodiment of the present invention will be described below with reference to the drawings for the understanding of the present invention. The following description however is not intended to limit the present invention recited in the claims.

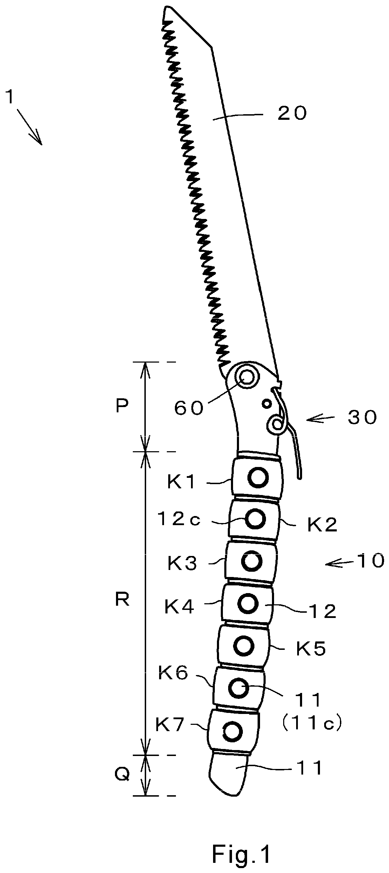

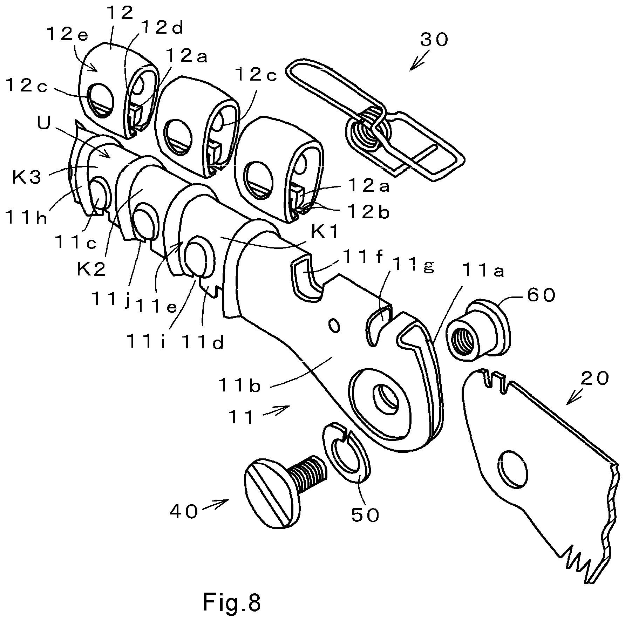

Referring first to FIGS. 1 and 8, a foldable saw 1 according to an embodiment of the present invention includes a saw handle 10 and a saw blade 20, has a latch body 30 as an accessory, and also has a mounting bolt 40, a spring washer 50, a nut 60, etc. as metal fittings for attaching the saw blade 20 to the saw handle. The saw is of a foldable type which allows the saw blade 20 to be pivotally folded and retracted in the saw handle 10.

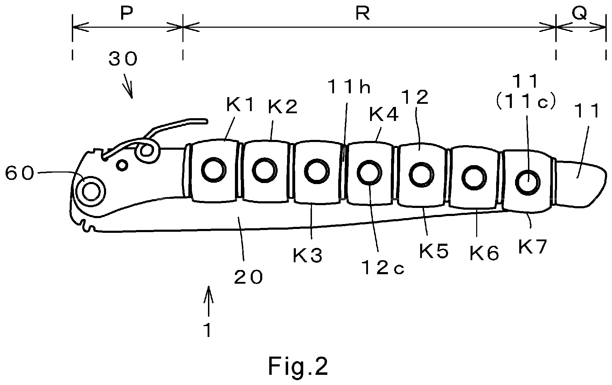

Referring to FIGS. 2 to 7 as well, the saw handle 10 is composed of a handle body 11 and a mounted body 12.

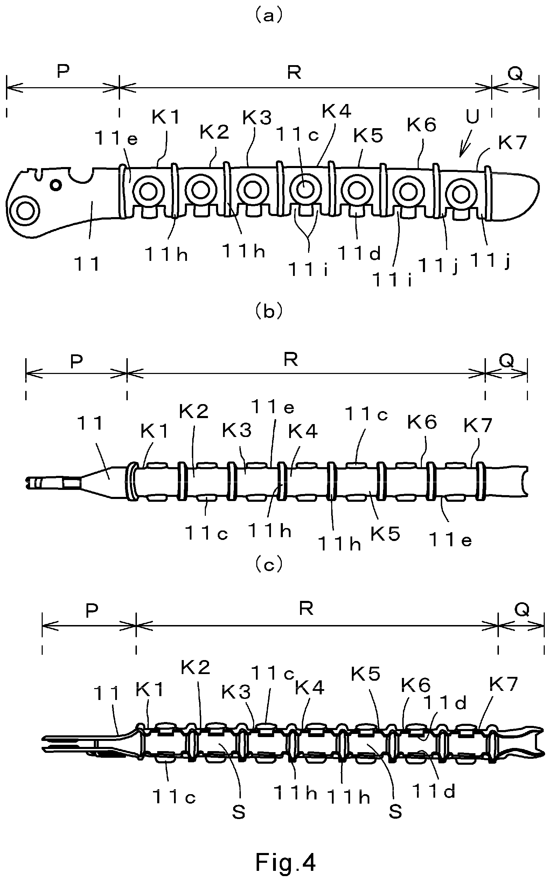

Referring to FIG. 4, the handle body 11 forms a framework of the saw handle 10. In the present embodiment, the handle body 11 is formed using a metal plate of stainless steel or the like, by subjecting the plate to pressing, punching, or the like.

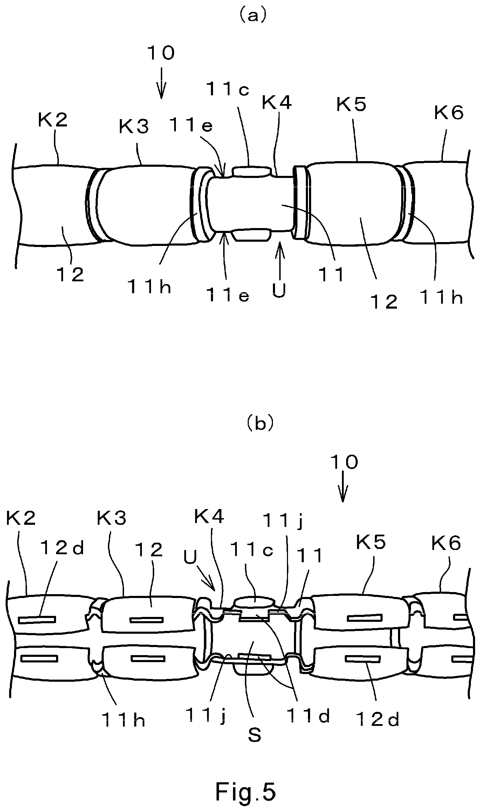

More specifically, as shown in FIG. 8, the handle body 11 is formed by bending a metal plate into an approximately inverted U shape (horseshoe shape) with the top surface as a border. A pair of bent pieces 11a, 11b of the inverted U shape forms a gap S (see FIG. 5) therebetween, for receiving the folded saw blade 20 therein.

At the front end of the saw handle 10, the saw blade 20 is detachably attached to form the foldable saw 1. The saw blade 20 is pivotally attached to the front portion of the saw handle 10 using the tie bolt 40, the spring washer 50, the nut 60, etc.

The saw blade 20 can be secured in the use position with the latch body 30. The latch body 30 is removably mounted and seated in a seating recess 11f provided on the back of the handle body 11 of the saw handle 10. In the use position of the saw blade 20, a portion of the latch body 30 engages a portion of the saw blade inside a latch groove 11g, which secures the saw blade in place.

The handle body 11 has at least a portion in its longitudinal direction divided into a plurality of unit compartments K (K1 to K7 in the present embodiment). As used herein, the "compartment" means a region separated from an adjacent region by a boundary, and the "unit compartment" means a compartment of a predetermined fixed size. In the present embodiment, seven unit compartments are arranged, separated by boundaries, as is evident from the drawings.

The plurality of unit compartments K are actually arranged in a row in a prescribed region R, which is a wide region excluding a front-end region P and a rear-end region Q of the handle body 11.

In the present embodiment, the unit compartments K (K1 to K7) consist of unit compartments K of a single type, all having the same dimensions.

The unit compartments K may of course be configured such that, for example, the unit compartments K2 to K6 in the center of the handle body 11 are composed of unit compartments K of a single type having the same dimensions, and the unit compartment K1 at the front end of the handle body 11 and the unit compartment K7 at the rear end are composed of unit compartments of different types having different dimensions. This is because the handle body 11 may have shapes at its front and rear ends that are different from the shape in the center. On the other hand, in the center of the saw handle 11, the shape often remains unchanged in the longitudinal direction, so it tends to be easy to arrange the same type of unit compartments K in succession.

In other words, all the unit compartments K do not have to be composed of a single type of unit compartments with the same dimensions. A plurality of different types of unit compartments K can be arranged in the right place.

In the present embodiment, the plurality of unit compartments K are arranged side by side in the longitudinal direction of the handle body 11. The boundaries of the unit compartments K are demarcated by boundary ribs 11h.

As shown in FIGS. 4 to 6, the boundary ribs 11h are configured to protrude from a surface of the handle body 11. Each boundary rib 11h may be configured in a strip shape over approximately the entire circumference of the handle body 11 of the approximately inverted U shape.

The plurality of boundary ribs 11h arranged at regular intervals in the longitudinal direction of the handle body 11 form a mounting recess U between the adjacent boundary ribs 11h, to allow a mounted body 12 to be mounted thereon. The mounting recess U is substantially a unit compartment K.

As shown in FIG. 5(b), the handle body 11 having the approximately inverted U shape has a pair of downward fitting protrusions 11d formed at open end portions 11j at the bottom of the handle body 11 to face each other. In the present embodiment, as shown in FIGS. 4(a), 5(b), and 6(a), the downward fitting protrusions 11d are formed as an approximately rectangular plate, which are configured such that the distal ends of the downward fitting protrusions 11d are aligned with the distal ends of the other opening end portions 11j of the handle body 11.

Further, the downward fitting protrusions 11d provided in each unit compartment K have the same dimensions and shapes and are provided at the same positions, for example in the bottom center of each unit compartment K. The downward fitting protrusions 11d may be formed by providing notches 11i on the handle body 11 by punching, for example.

Further, as shown in FIGS. 1 to 8, each of the plurality of unit compartments K (K1 to K7) has a pair of front and back transverse fitting protrusions 11c in the center of the unit compartment K. Specifically, as shown in FIGS. 4(b) and 5(a), in each unit compartment K of the handle body 11, the pair of transverse fitting protrusions 11c of an approximately cylindrical shape are provided at opposing positions in the center of both side surfaces 11e, to protrude toward the sides of the handle body 11.

In the present embodiment, the transverse fitting protrusions 11c in each unit compartment K are configured to have the same dimensions and shapes, and to be provided at the same forming positions.

The transverse fitting protrusions 11c, of course, do not necessarily have to be of a circular shape. They may be of a rectangular or triangular shape.

It is configured such that the amount of protrusion of the transverse fitting protrusions 11c toward the sides of the handle body 11 is aligned with the amount of protrusion of the boundary ribs 11h toward the sides of the handle body 11.

The transverse fitting protrusions 11c and the boundary ribs 11h can be formed by pressing using a die, for example.

The handle body 11 can be produced, for example, through the following steps.

Firstly, a flat metal plate is prepared.

A die for forming the front-end region P, a die for forming the rear-end region Q, and a die for forming the prescribed region R are prepared and combined together. In this case, the die for forming the prescribed region R may be a combination die that can be increased or decreased in number of its constituent dies. For example, when a handle body 11 of a minimum length is composed of five unit compartments (K1 to K5) of one type, in order to form a handle body 11 composed of seven unit compartments (K1 to K5) of the same type as shown in the figures, a combination die may be increased in number of its constituent dies by adding dies for the two unit compartments K to the die for the handle body 11 of the minimum length. Using such a combination die enables forming a handle body 11 of various lengths, increased or decreased in units of the length of the unit compartment K. That is, the combination die can be used to simultaneously perform: punching out from the metal plate the development plan of the handle body, variously increased or decreased in length; and working the boundary ribs 11h and the transverse fitting protrusions 11c. Thereafter, the metal plate in the shape of the development plan can be bent into an approximately inverted U shape using a press brake or the like, to produce the handle body 11.

The handle body 11 according to the present embodiment is produced in the above-described manner.

The mounted body 12 is detachably attached to the unit compartments K of the handle body 11 for mounting. The mounted body 12 can be made of rubber or plastic. The mounted body 12 preferably has some elasticity, so that the mounted body 12 can be slightly pulled, during the mounting process, to be fitted to the downward fitting protrusions 11d and transverse fitting protrusions 11c of the handle body 11 and then fitted tightly together.

The mounted body 12 is configured as a plurality of unit mounted bodies 12 which are detachably mounted correspondingly on the plurality of unit compartments K, respectively. Of course, the entirety of the mounted body 12 does not have to be composed of the unit mounted bodies. A unit mounted body 12 is one that is mounted correspondingly on a unit compartment K present in the handle body 11.

The saw handle 10 is completed as the unit mounted bodies 12 are mounted on the unit compartments K.

In the case where the plurality of unit compartments K of the handle body 11 consist of the unit compartments K of a single type, the unit mounted bodies 12 of a single type corresponding to the single type may be prepared. In the case where the unit compartments K consist of two types, then two types corresponding to the two types are prepared. Similarly, in the case where the unit compartments K consist of three or more types, the unit mounted bodies 12 of three or more types corresponding thereto are prepared. In the present embodiment, all the unit compartments K (K1 to K7) are of a single type, so the unit mounted bodies 12 prepared are also of a single type.

The unit mounted bodies 12 may have subtypes within the same type. Examples of the subtypes include unit mounted bodies of the same type which vary in color alone, unit mounted bodies of the same type which vary in thickness alone, and unit mounted bodies of the same type which vary in color and thickness.

For example, the unit mounted bodies 12 of the aforementioned subtypes varying in thickness can be used to fine-tune the thickness of the resultant grip of the saw handle 10, to thereby provide a saw handle with the grip thickness according to the user preference.

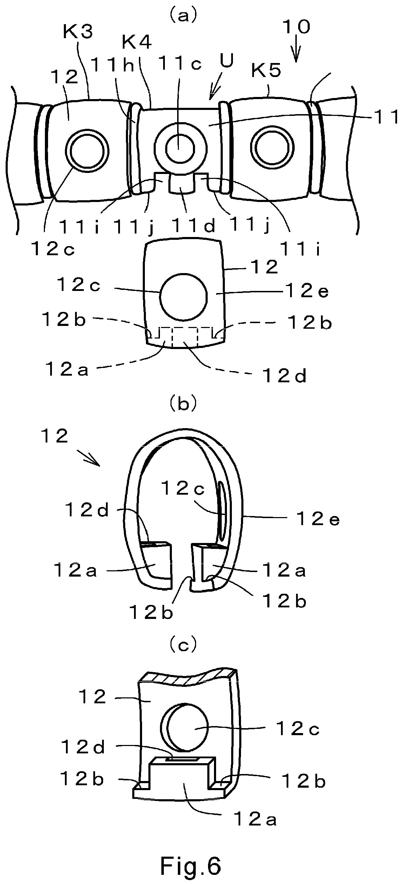

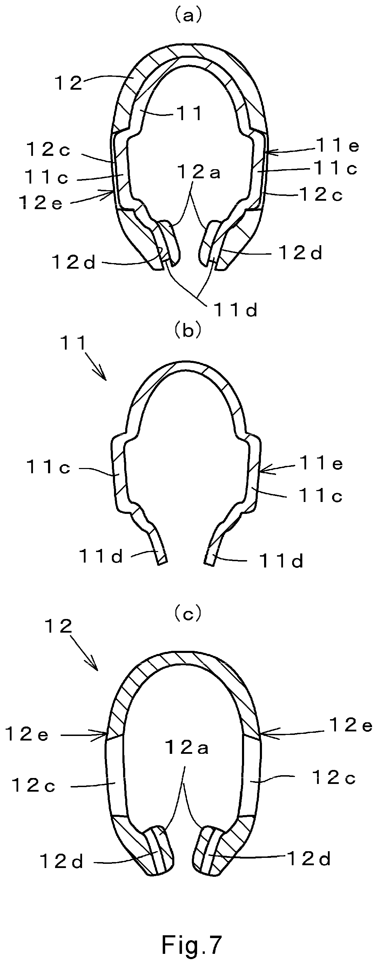

As shown in FIGS. 6(b), 7(a), 7(c), etc., the mounted body 12 is configured to have an outer shape of approximately inverted U shape in advance, as with the handle body 11. However, unlike the handle body 11, which is made of a metal body, the mounted body 12 is formed in a flexible condition so that it can be bent or stretched as appropriate. This is by virtue of the flexibility of the material. The mounted body is of course similar in shape to the approximately inverted U shape of the handle body 11, although it does not necessarily have to be of exactly the same approximately inverted U shape.

Further, as shown in FIGS. 6 to 8, the mounted body 12, which is formed of an approximately inverted U shape, has transverse fitting receiving portions 12c in the center of a pair of side surfaces 12e, 12e. The transverse fitting receiving portions 12c are to be fitted with the transverse fitting protrusions 11c provided in each unit compartment K of the handle body 11.

Each transverse fitting receiving portion 12c is actually a through hole for fitting, and is a circular hole of the size allowing a transverse fitting protrusion 11c of the handle body 11 to penetrate just therethrough.

The shape of the transverse fitting receiving portion 12c is of course changed in accordance with the shape of the transverse fitting protrusion 11c of the handle body 11 so as to ensure a good fit.

Further, as shown in FIG. 6, the mounted body 12 has a pair of thick-walled portions 12a, 12a, increased in thickness and facing each other, on both inner sides of the lower end opening of the approximately inverted U shape. The thick-walled portions 12a may be formed, for example, in an inverted T shape.

Each thick-walled portion 12a is provided with a downward fitting receiving portion 12d to be fitted with the downward fitting protrusion 11d of the handle body 11. In the present embodiment, the downward fitting receiving portion 12d is specifically configured as a through hole penetrating through the thick-walled portion 12a in an up-and-down direction.

In addition, a pair of upward seating portions 12b, 12b are provided on both sides of the inverted T-shaped thick-walled portion 12a. The seating portions 12b serve to seat the downward open end portions 11j provided on both sides of the lower end opening of the handle body 11 when the mounted body 12 is mounted on the handle body 11.

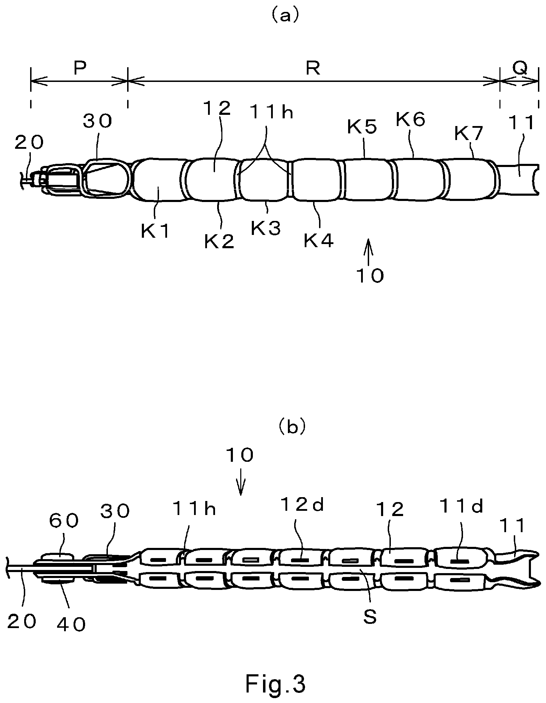

Further, as shown in FIGS. 3(a) and 5(a), the thickness of the mounted body 12 is configured such that the mounted body 12 is substantially flush with or slightly higher than flush with the boundary ribs 11h in the state where the mounted body 12 is mounted on the mounting recess U.

Of course, the mounted body 12 may be provided with subtypes which vary in thickness, as explained previously, whereby the thickness of the grip can be changed or adjusted so as to be flush with or slightly higher than flush with the boundary ribs 11h.

Similarly, the thickness of the mounted body 12 is configured such that the mounted body 12 is substantially flush with or slightly higher than flush with the transverse fitting protrusions 11c of the handle body 11 in the state where the mounted body 12 is mounted on the mounting recess U.

The mounted body 12 can easily be produced by, for example, injection molding or other press molding.

For attaching the mounted body 12 to the handle body11, firstly, unit mounted bodies 12 of one or more types corresponding to the unit compartments K (K1 to K7) of the handle body 11 are chosen. The unit mounted bodies 12 are then detachably attached to the corresponding unit compartments K.

For attaching each mounted body 12 to the handle body 11, the mounted body 12 is slightly stretched out and applied to the corresponding unit compartment K of the handle body 11 so as to straddle from the back. Then, one of the downward fitting receiving portions 12d of the mounted body 12 is firstly fitted to the corresponding one of the downward fitting protrusions 11d of the handle body 11. Next, the transverse fitting receiving portion 12c on the same side of the mounted body 12 is fitted to the corresponding one of the transverse fitting protrusions 11c of the handle body 11. Further, the other transverse fitting receiving portion 12c of the mounted body 12 is fitted to the corresponding other transverse fitting protrusion 11c of the handle body 11. Lastly, the other downward fitting receiving portion 12d of the mounted body 12 is fitted to the corresponding other downward fitting protrusion 11d of the handle body 11. The above operations are performed on every unit compartment K to complete the attachment of the mounted body 12, whereby the saw handle 10 is completed.

It should be noted that the attachment of the mounted body 12 to a unit compartment K of the handle body 11 is not necessarily limited to the above-described procedure.

The saw handle 10 according to the present invention has a structure in which the prescribed range R of the handle body 11 is divided into a plurality of unit compartments K (K1 to K7) and the mounted body 12 is detachably attached correspondingly to each unit compartment K. Accordingly, only changing the number of unit compartments K of the handle body 11 makes it possible to produce the saw handles 10 of different lengths very easily, without any change to the mounted body 12 itself. This idea is completely absent from the conventional saw handles.

Needless to say, with regard to the production of the handle body 11 as well, handle bodies of different lengths can be produced sharing the same die, by simply increasing or decreasing the number of dies constituting the units of a combination die. It is not necessary to prepare a die for each of the handle bodies of different lengths, leading to a considerably reduced production cost.

The saw handle 10 of the present invention is also free from difficult production methods such as insert molding the metal handle body simultaneously with the rubber or other grip material, and can greatly reduce the production cost.

If the handle body and the rubber or other grip are produced as a single piece, the grip damage, life, etc. will directly determine the life of the saw handle. In contrast, in the case of the saw handle 10 of the present invention, even in the event that the mounted body 12 suffers wear, soil, or breakage associated with the use or the like, the saw handle allows only the mounted body 12 to be replaced individually.

Further, in the case of the saw handle 10 of the present invention, the use of mounted bodies 12 of various different color subtypes enables colorful saw handles 10 combining various colors to be obtained freely during production or afterwards.

Of course, the use of mounted bodies 12 of different thickness subtypes makes it possible to freely produce saw handles of different grip thicknesses or freely adjust the grip thickness afterwards.

Further, in the saw handle 10 of the present invention, the mounted body 12 is mounted on the mounting recess U in the state of being abutted against the adjacent boundary ribs 11h. This enables the mounted body 12 to be mounted while being guided along the boundary ribs 11h. This facilitates positioning, and also improves work efficiency during production as well as during replacement of the mounted body 12. In addition, after the mounting, even when a force is applied in the longitudinal direction of the saw handle 10 during the use of the foldable saw 1, the mounted body 12 is effectively prevented from being displaced because it is abutted against the adjacent boundary ribs 11h. This results in a good feel of use, and also improves the durability of the mounted body 12 effectively, as the mounted body suffers no rubbing due to the displacement.

Further, in the saw handle 10 of the present invention, the transverse fitting receiving portions 12c and the transverse fitting protrusions 11c are fitted in the state where the mounted body 12 is mounted on the handle body 11. This can further reliably prevent the positional shift of the mounted body 12.

Further, in the saw handle 10 of the present invention, with the longitudinal direction being divided by a plurality of boundary ribs 11h, there are portions with no mounted body 12 at predetermined intervals in the longitudinal direction. Accordingly, the edge portions of the mounted body 12 where the mounted body 12 is interrupted serves as a kind of snag within the palm of the hand when a user grasps the saw handle 10, thereby improving the grip.

Further, in the saw handle 10 of the present invention, the handle body 11 is made of a metal body having an approximately inverted U shape, and the mounted body 12 is made of rubber having an approximately inverted U shape that follows the shape of the handle body 11, so a cavity can be provided inside the handle body 11 and the mounted body 12. This reduces the weights and production costs of the handle body 11 and the mounted body 12. It also achieves good strength and good feel of use simultaneously.

At the time of mounting the mounted body 12 on the handle body 11, the gap S provided at the open end portions 11j of the handle body 11 can be used as a working space for attaching the mounted body 12. This can improve the efficiency of the work of mounting the mounted body 12 on the handle body 11.

Further, in the saw handle 10 of the present invention, a pair of downward fitting protrusions 11d are provided at the open end portions 11j of the handle body 11, and at the thick-walled portions 12a on the inner sides of the open end portions of the mounted body 12, seating portions 12b and downward fitting receiving portions 12d to be fitted with the downward fitting protrusions 11d are provided. Accordingly, at the time of mounting the mounted body 12 on the handle body 11, firstly, one of the downward fitting receiving portions 12d is fitted to one of the downward fitting protrusions 11d. Then, in this state, the mounted body 12 is pulled upwardly on the handle body 11 so as to be fitted along the mounting recess U, during which the seating portions 12b regulate the movement of the mounted body 12. Lastly, the other downward fitting receiving portion 12d is fitted to the other downward fitting protrusion 11d.

On the other hand, when detaching the mounted body 12 from the handle body 11, a user can insert the fingertip into the gap S provided at the opening end portions 11j of the handle body 11, and hook onto and pull downward the thick-walled portion 12a. This can readily disengage the fitting between the downward fitting protrusion 11d and the downward fitting receiving portion 12d.

In the above-described manner, the mounted body 12 can be efficiently attached to and detached from the handle body 11, thereby reducing the working time.

It should be noted that the boundary ribs 11h, the fitting protrusions provided on the handle body 11, and the fitting receiving portions provided on the mounted body 12 have their shapes, sizes, and placement positions not limited to those of the present embodiment; they can be changed as appropriate.

Although the fitting protrusions are provided on the handle body 11 and the fitting receiving portions are provided on the mounted body 12 in the embodiment of the present invention, the configuration is not necessarily limited thereto. The fitting receiving portions may be provided in the handle body 11 and the fitting protrusions to be fitted into the fitting receiving portions may be provided on the mounted body 12.

Further, although a foldable saw is used as the saw in the embodiment of the present invention, the configuration is not necessarily limited thereto. The idea of the present invention is applicable to saw handles other than those for the foldable saw.

### Industrial Applicability

The present invention has high industrial applicability in the fields of saw handles and saws having a saw blade mounted on the saw handle, as the present invention can improve production efficiency and reduce production costs even in the case where saw handles, with a saw blade mounted on the distal end thereof, are to be produced in various lengths.

### Reference Signs List

- 1: foldable saw
- 10: saw handle
- 11: handle body
- 11a: bent piece
- 11b: bent piece
- 11c: transverse fitting protrusion
- 11d: downward fitting protrusion
- 11e: side surface
- 11f: seating recess
- 11g: latch groove
- 11h: boundary rib
- 11i: notch
- 11j: open end portion
- 12: mounted body
- 12a: thick-walled portion
- 12b: seated portion
- 12c: transverse fitting receiving portion
- 12d: downward fitting receiving portion
- 12e: side surface
- 20: saw blade
- 30: latch body
- 40: tie bolt
- 50: spring washer
- 60: nut
- K (K1 to K7): unit compartment
- P: front-end region
- Q: rear-end region
- R: prescribed region
- S: gap
- U: mounting recess

## Claims

1. A saw handle used with a saw blade mounted on a distal end thereof, the saw handle comprising: a handle body; and a mounted body mounted on the handle body; wherein the handle body has a wide range in a longitudinal direction divided into a plurality of unit compartments, the mounted body is composed of a plurality of unit mounted bodies to be mounted on the plurality of unit compartments, respectively, and the plurality of unit mounted bodies are detachably attached correspondingly to the plurality of unit compartments of the handle body.

2. The saw handle according to claim 1, wherein the unit compartments formed in the handle body are each demarcated by boundary ribs configured to protrude from a surface of the handle body, the adjacent boundary ribs define a mounting recess therebetween on which the mounted body is to be mounted, and the plurality of unit mounted bodies are detachably attached to the mounting recesses between the boundary ribs, correspondingly to the plurality of unit compartments of the handle body.

3. The saw handle according to claim 1 or 2, wherein the handle body is made of a metal body having an approximately inverted U shape and has downward fitting protrusions at both lower ends of the approximately inverted U-shaped handle body, the mounted body is made of a rubber or other elastic body having an approximately inverted U shape and has downward fitting receiving portions at both lower ends of the approximately inverted U-shaped mounted body, and the mounted body is detachably attached to the handle body by fitting the downward fitting receiving portions of the mounted body to the downward fitting protrusions of the handle body.

4. The saw handle according to any of claims 1 to 3, wherein the handle body has transverse fitting protrusions in the center of both side surfaces of each unit compartment, the mounted body has transverse fitting receiving portions in the center of both side surfaces thereof, and the mounted body is detachably attached to the handle body by fitting the transverse fitting receiving portions of the mounted body to the transverse fitting protrusions of the handle body.

5. The saw handle according to any of claims 1 to 4, wherein the plurality of unit compartments in the handle body are composed of unit compartments of a single type or two or more types of different dimensions, the mounted body is composed of unit mounted bodies of a single type or two or more types corresponding respectively to the types of the unit compartments, and the unit mounted bodies are detachably attached correspondingly to the plurality of unit compartments of the handle body.

6. The saw handle according to claim 5, wherein each type of the unit mounted bodies has, as subtypes thereof, at least different-color unit mounted bodies that vary only in color, different-thickness unit mounted bodies that vary only in thickness, and different-color-and-thickness unit mounted bodies that vary in color and thickness, and to each of the plurality of unit compartments of the handle body, the unit mounted body of any of the subtypes of the corresponding type is detachably attached.

7. A saw comprising: the saw handle according to any one of claims 1 to 6; and a saw blade mounted on a distal end of the saw handle.
